Europäisches Patentamt

European Patent Office

Office européen des brevets

(11) Numéro de publication: **0 494 473 A1**

# DEMANDE DE BREVET EUROPEEN

(21) Numéro de dépôt: **91203393.3**

(22) Date de dépôt: **23.12.91**

(51) Int. Cl.5: **C08J 3/12, B29C 47/06, B29B 9/12, //C08L31/04**

(30) Priorité: **08.01.91 BE 9100013**

(43) Date de publication de la demande: **15.07.92 Bulletin 92/29**

(84) Etats contractants désignés: **AT BE CH DE DK ES FR GB GR IT LI LU NL SE**

(71) Demandeur: **SOLVAY**
**Rue du Prince Albert, 33**
**B-1050 Bruxelles(BE)**

(72) Inventeur: **Amory, David**
**Rue de la Grance Ile, 3**
**B-1000 Bruxelles(BE)**
Inventeur: **Dehennau, Claude**
**Chemin des Postes, 236**
**B-1410 Waterloo(BE)**

(74) Mandataire: **Marckx, Frieda et al**
**Solvay Département de la Propriété**
**Industrielle 310, rue de Ransbeek**
**B-1120 Bruxelles(BE)**

(54) **Granules de copolymère d'acétate de vinyle et d'éthylène enrobé, procédé pour les produire et leur utilisation comme adhésifs.**

(57) Granules de copolymère d'acétate de vinyle et d'éthylène enrobé, procédé pour les produire et leur utilisation comme adhésifs.

Les granules coextrudés sont constitués de copolymère d'acétate de vinyle et d'éthylène enrobé par coextrusion d'un polymère thermoplastique polaire tel que, par exemple, du polyméthacrylate de méthyle ou un copolymère d'éthylène et d'acétate de vinyle. Ils sont avantageusement produits par extrusion-séchage d'un coagulat humide de copolymère d'acétate de vinyle et d'éthylène et enrobage en ligne par coextrusion avec un polymère thermoplastique polaire. Les granules coextrudés ne sont pas collants, ils se laissent stocker sans problème et sont utilisables comme adhésifs de coextrusion .

EP 0 494 473 A1

La présente invention concerne des granules de copolymère d'acétate de vinyle et d'éthylène enrobé d'un polymère thermoplastique polaire, un procédé pour produire de tels granules et l'utilisation de ces granules comme adhésifs. Par copolymère d'acétate de vinyle et d'éthylène, on entend les copolymères d'acétate de vinyle et d'éthylène à teneur prépondérante en acétate de vinyle.

Il est bien connu d'associer par coextrusion au sein de structures multicouches des polymères de masse, tels que par exemple le polychlorure de vinyle ou les polyoléfines, avec des polymères dits spéciaux apportant des propriétés particulières, telles que la résistance à la corrosion ou aux rayons ultraviolets ou encore l'imperméabilité aux gaz, aux arômes et/ou à la vapeur d'eau.

Les copolymères d'acétate de vinyle et d'éthylène tels que définis ci-dessus constituent des adhésifs de coextrusion efficaces, utilisés seuls ou en mélange avec d'autres polymères adhésifs, pour faire adhérer des polymères de masse, tels que les polymères du chlorure de vinyle ou les polyoléfines, avec des polymères spéciaux, tels que les copolymères du chlorure de vinylidène, les polymères du fluorure de vinylidène, les copolymères d'alcool vinylique et d'éthylène (copolymères EVOH), les polyamides, les polyéthylènetéréphtalates ("PET") etc. L'utilisation d'adhésifs de coextrusion à base de copolymères d'acétate de vinyle et d'éthylène est décrite dans les demandes de brevets EP-A- 0 124 931 du 17.04.1984, EP-A-0 164 766 du 10.04.1985, EP-A- 0 259 899 du 30.06.1987 et EP-A-0 323 672 du 27.12.1988 toutes au nom de SOLVAY & Cie.

Les copolymères d'acétate de vinyle et d'éthylène, ci-après désignés par le vocable "copolymères VAE", présentent néanmoins l'inconvénient notoire d'être fort collants et de se présenter habituellement sous la forme d'une masse agglomérée, ce qui rend ardue leur mise en oeuvre. Pour pallier cet inconvénient, on a déjà préconisé d'enrober les copolymères d'acétate de vinyle et d'éthylène au moyen d'un polymère thermoplastique dur, tel que par exemple du polychlorure de vinyle, (cf. par exemple le brevet BE-A- 697025 du 14 avril 1967 au nom de SOLVAY & Cie). Suivant ce document, l'enrobage se fait par coagulation d'un latex de polymère dur, tel que le polychlorure de vinyle, sur un latex coagulé de copolymère VAE. Le copolymère VAE enrobé isolé par essorage, suivi de séchage se présente sous la forme d'une poudre sèche de mauvaise coulabilité. De plus, dans le cas où l'adhésif de coextrusion est constitué d'un mélange de copolymère VAE avec un autre polymère adhésif, sa préparation impliquera encore une opération ultérieure de mélange et de granulation du mélange des polymères adhésifs.

La présente invention vise à procurer des copolymères d'acétate de vinyle et d'éthylène enrobés d'un polymère thermoplastique utilisables comme adhésifs de coextrusion qui ne présentent pas les inconvénients précités.

A cet effet, l'invention procure des granules coextrudés constitués de copolymère d'acétate de vinyle et d'éthylène enrobé par coextrusion au moyen d'un polymère thermoplastique polaire. Les granules coextrudés de l'invention présentent une excellente coulabilité et se laissent stocker sans aucun problème, ils permettent l'alimentation aisée des trémies des extrudeuses et sont utilisables tels quels comme adhésifs de coextrusion.

L'invention procure également un procédé pour la fabrication desdits granules coextrudés. Suivant ce procédé, on produit un jonc coextrudé par extrusion-séchage d'un coagulat humide de copolymère d'acétate de vinyle et d'éthylène et enrobage en ligne par coextrusion avec un polymère thermoplastique polaire, ledit jonc étant ensuite soumis à une granulation. Le procédé de fabrication de granules coextrudés selon l'invention est d'une grande simplicité en ce qu'il ne nécessite pas le séchage intermédiaire du coagulat de copolymère VAE et en ce qu'il permet l'obtention, en une seule étape, de granules à base de copolymères d'acétate de vinyle et d'éthylène utilisables tels quels comme adhésifs de coextrusion.

L'utilisation des granules coextrudés selon l'invention comme adhésifs de coextrusion constitue un autre objet de la présente invention.

Par copolymère d'acétate de vinyle et d'éthylène, on entend désigner les copolymères d'acétate de vinyle et d'éthylène contenant au moins 55 % en poids d'acétate de vinyle. De préférence, les copolymères d'acétate de vinyle et d'éthylène entrant dans la composition des granules coextrudés selon l'invention contiennent de 60 à 99 % en poids d'acétate de vinyle et, plus particulièrement encore, de 70 à 95 % en poids d'acétate de vinyle.

On donne, par ailleurs la préférence aux copolymères VAE relativement visqueux. Des copolymères VAE préférés présentent un indice de fusion ("melt index"), mesuré à 170°C sous une charge de 5 kg, compris entre 0,1 et 10 g/min et, plus particulièrement, entre 0,25 et 5 g/min.

Par polymère thermoplastique polaire, on entend désigner les polymères thermoplastiques possédant un moment dipolaire permanent ou autrement dit les polymères thermoplastiques qui contiennent des groupements polaires dans leur molécule. A titre d'exemples non limitatifs de pareils polymères thermoplastiques polaires, utilisables seuls ou en mélange, on peut mentionner les polymères halogénés, tels que les polymères (homo- et copolymères) du chlorure de vinyle et ceux du fluorure de vinylidène, les polymères contenant des fonctions nitriles tels que le polyacrylonitrile et les copolymères du nitrile acrylique et du styrène, les polycétones, les polyesters tant aliphatiques qu'aromatiques, tels que les polyacrylates et polyméthacrylates d'alkyles inférieurs (C1 à C3) et le polyéthylènetéréphtalate, les copolymères d'alcool vinylique et d'éthylène (c'est-à-dire les copolymères d'acétate de vinyle et d'éthylène dans lesquels au moins 90 % des groupements acétates ont été transformés par hydrolyse ou alcoolyse en groupements hydroxyles), les polycarbonates aromatiques, les polyamides ou nylons qui constituent, par ailleurs, tous des polymères bien connus.

On donne la préférence aux polymères thermoplastiques polaires qui permettent de combiner la fonction de polymère enrobant (évitant le collage du copolymère VAE) et, le cas échéant, celle de polymère adhésif d'appoint et/ou compatibilisant (améliorant les performances du copolymère VAE).

Des polymères thermoplastiques polaires auxquels on donne la préférence sont choisis parmi les polyacrylates et les polyméthacrylates de méthyle et d'éthyle, homo- et copolymères, et les copolymères d'éthylène et d'acétate de vinyle à teneur prépondérante en éthylène ("copolymères EVA") et leurs mélanges. Les polymères thermoplastiques polaires particulièrement préférés selon la présente invention sont choisis parmi le polyméthacrylate de méthyle et les copolymères d'éthylène et d'acétate de vinyle contenant de 60 à 95 % en poids d'éthylène et, plus particulièrement encore, de 75 à 95 % en poids d'éthylène et leurs mélanges.

Des polymères thermoplastiques polaires tout particulièrement préférés selon la présente invention sont donc choisis parmi le polyméthacrylate de méthyle et les copolymères d'éthylène et d'acétate de vinyle contenant de 75 à 95 % en poids d'éthylène et leurs mélanges.

Les teneurs pondérales relatives en copolymère d'acétate de vinyle et d'éthylène et en polymère thermoplastique polaire des granules coextrudés selon l'invention ne sont pas critiques et peuvent varier dans une large mesure. Pour fixer les idées, la teneur pondérale des granules en copolymère d'acétate de vinyle et d'éthylène est généralement comprise entre 40 et 99 % en poids et plus particulièrement entre 45 et 95 % en poids.

Dans le cas où les granules coextrudés sont utilisés comme adhésifs de coextrusion et où l'adhésif est constitué essentiellement de copolymère d'acétate de vinyle et d'éthylène, le polymère thermoplastique polaire faisant essentiellement office de polymère enrobant, la teneur des granules coextrudés en copolymère d'acétate de vinyle et d'éthylène sera habituellement comprise entre 80 et 99 % en poids, plus particulièrement entre 85 et 95 % en poids, le solde étant constitué essentiellement de polymère thermoplastique polaire. Dans le cas où les granules coextrudés sont utilisés comme adhésifs de coextrusion et où l'adhésif est constitué essentiellement d'un mélange de copolymère d'acétate de vinyle et d'éthylène et de polymère thermoplastique polaire, ce dernier faisant dans ce cas office de polymère enrobant et de polymère adhésif d'appoint, la teneur des granules en copolymère d'acétate de vinyle et d'éthylène sera habituellement comprise entre 40 et 90 % en poids, plus particulièrement entre 50 et 75 % en poids, le solde étant constitué essentiellement de polymère thermoplastique polaire. Il est entendu qu'il n'est pas exclu d'incorporer des quantités mineures de polymère thermoplastique polaire dans le copolymère d'acétate de vinyle et d'éthylène avant son enrobage au moyen d'un polymère thermoplastique polaire.

La dimension des granules coextrudés n'est pas véritablement critique. Néanmoins, en vue d'éviter tout collage des granules lors d'un stockage prolongé, il est recommandé que le rapport longueur/diamètre des granules soit égal à 1 au moins. La longueur des granules ne dépasse habituellement pas 10 mm et est généralement comprise entre entre 3 et 5 mm.

Le procédé selon l'invention pour la fabrication de granules coextrudés consiste à produire un jonc coextrudé par extrusion-séchage d'un coagulat humide de copolymère d'acétate de vinyle et d'éthylène et enrobage en ligne par coextrusion avec un polymère thermoplastique polaire tel que défini ci-dessus, ledit jonc étant ensuite soumis à une granulation. Par coagulat humide, on entend désigner les coagulats contenant au maximum 95 % en poids de matières sèches. En effet, les coagulats contenant moins de 5 % en poids d'eau sont collants et difficilement extrudables. La teneur en eau des coagulats humides peut par ailleurs sans inconvénient être aussi élevée que 55 % en poids. Néanmoins, il est préférable de recourir à des coagulats humides contenant de l'ordre de 50 à 90 % en poids de matières solides. De tels coagulats humides sont obtenus avantageusement par coagulation, par toute technique de coagulation usuelle, d'émulsions aqueuses ("latex") provenant de la copolymérisation en émulsion aqueuse d'acétate de vinyle et d'éthylène, suivie le cas échéant d'un essorage.

L'extrusion-séchage du coagulat humide s'effectue avantageusement dans une extrudeuse à double vis corotatives pourvue d'un ou de plusieurs évents, destinés à l'évacuation de la vapeur d'eau à une température supérieure à 100°C mais inférieure à 160°C et située, de préférence entre 120 et 150°C. L'extrudeuse à double vis est raccordée à un bloc d'alimentation de coextrusion dans lequel le jonc de copolymère d'acétate de vinyle et d'éthylène sec est enrobé par coextrusion au moyen d'un polymère thermoplastique polaire fondu sur une extrudeuse monovis. Le réglage du rapport des débits de copolymère d'acétate de vinyle et d'éthylène et de polymère thermoplastique polaire permet de régler la teneur pondérale des granules coextrudés en copolymère d'acétate de vinyle et d'éthylène et en polymère thermoplastique polaire. La plage de températures utilisées sur l'extrudeuse monovis sera bien entendu fonction de la nature du polymère thermoplastique polaire utilisé. A titre indicatif, dans le cas où le polymère enrobant est constitué par du polyméthacrylate, la température d'extrusion sur monovis se situera généralement aux environs de 200 à 220°C; dans le cas de copolymères d'éthylène et d'acétate de vinyle aux environs de 140 à 180°C.

Les granules coextrudés selon l'invention ne sont pas collants et se laissent stocker sans problème. Ils peuvent être ajoutés à un polymère quelconque en vue d'en modifier les propriétés physiques et/ou mécaniques. Ils sont utilisables, en particulier, comme adhésifs de coextrusion. Ils conviennent, notamment, pour produire des complexes multicouches coextrudés à base de polymères de masse, tels que par exemple les polymères du chlorure de vinyle et les polyoléfines, et de polymères dits "spéciaux", tels que par exemple les copolymères du chlorure de vinylidène (communément appelés "PVDC"), les polymères et les copolymères du fluorure de vinylidène ou encore les copolymères d'alcool vinylique et d'éthylène (communément appellés "EVOH"). Ils conviennent tout particulièrement pour la coextrusion de complexes multicouches stérilisables à la vapeur.

Les exemples qui suivent sont destinés à illustrer l'invention.

Dans tous les exemples, un copolymère humide d'acétate de vinyle et d'éthylène contenant 45 % en poids d'eau est séché par extrusion sur une extrudeuse à double vis corotatives raccordée à un bloc d'alimentation de coextrusion où le jonc extrudé et sec de copolymère VAE est coextrudé en ligne avec un polymère thermoplastique polaire enrobant.

Dans tous les exemples, on a utilisé un copolymère d'acétate de vinyle et d'éthylène contenant 87 % en poids d'acétate de vinyle présentant un indice de fusion (MI), mesuré à 170°C sous une charge de 5 kg, égal à 1,4 g/min.

Dans les exemples 1 à 4, le polymère thermoplastique polaire est constitué par un copolymère d'éthylène et d'acétate de vinyle contenant 81 % en poids d'éthylène ("copolymère EVA"). Dans les exemples 5 et 6, il s'agit de polyméthacrylate de méthyle ("PMMA") et dans les exemples 7 et 8 d'un mélange de copolymère EVA tel qu'utilisé aux exemples 1 à 4 et de PMMA tel qu'utilisé aux exemples 5 et 6.

Le copolymère VAE humide est séché par extrusion dans une extrudeuse corotative équipée de deux vis imbriquées (rapport longueur/diamètre égal à 42) dont le fourreau est équipé de deux évents de dégazage, maintenus sous pression atmosphérique, et situés respectivement à une distance de l'alimentation correspondant à 13 et 21 fois le diamètre. Un dernier évent de dégazage, raccordé à une pompe à vide, est situé à une distance de l'alimentation égale à 33 fois le diamètre. La température du fourreau est fixée à 150°C et la vitesse de rotation des vis à 100 t/min. Le jonc extrudé de copolymère VAE sec alimente ensuite un bloc d'alimentation de coextrusion permettant la fabrication d'un jonc coextrudé ayant un diamètre d'environ 2,5 mm. Ledit bloc d'alimentation est équipé d'une extrudeuse monovis de 30 mm de diamètre, présentant un rapport longueur/diamètre égal à 20, et opérant avec un taux de compression de 2,5 dans laquelle le polymère thermoplastique d'enrobage est fondu et homogénéisé.

Dans le tableau en annexe sont reprises les conditions générales de la coextrusion et, en particulier, la vitesse de rotation de la monovis, les températures dans les différentes zones du fourreau de l'extrudeuse monovis, les températures de consigne du bloc d'alimentation, le débit total de coextrusion et enfin la composition pondérale des granules coextrudés.

Les joncs coextrudés sont ensuite soumis à une granulation pour produire des granules coextrudés d'environ 3 mm de long. Ces granules ne présentent aucun problème de collage, même après de longues périodes de stockage.

Ils sont utilisables comme adhésifs de coextrusion pour la production de complexes multicouches à base de polymères de masse et de polymères dits spéciaux qui résistent à la stérilisation à la vapeur.

TABLEAU

| N° de l' exemple | Vitesse monovis, t/min | Temp.du fourreau, °C | | | | Temp. de consigne du bloc,°C | Débit total, kg/h | Teneur en copolymère VAE,% en pds |
|---|---|---|---|---|---|---|---|---|
| 1 | 5 | 120 | 140 | 150 | 150 | 150 | 3,18 | 85 |
| 2 | 10 | " | " | " | " | " | 3 | 78 |
| 3 | 15 | " | " | " | " | " | 2,85 | 67 |
| 4 | 4 | " | " | " | " | " | 2 | 88 |
| 5 | 3 | 170 | 190 | 220 | 220 | 220 | 2,4 | 87 |
| 6 | 4 | " | " | " | " | " | 2,4 | 82 |
| 7 | 4 | 170 | 180 | 200 | 200 | 200 | 2,4 | 85 |
| 8 | 7 | " | " | " | " | " | 2,8 | 58 |

**Revendications**

1. Granules coextrudés constitués d'un copolymère d'acétate de vinyle et d'éthylène enrobé par coextrusion au moyen d'un polymère thermoplastique polaire.

2. Granules coextrudés selon la revendication 1, caractérisés en ce que le copolymère d'acétate de vinyle et d'éthylène contient de 60 à 99 % en poids d'acétate de vinyle.

3. Granules coextrudés selon la revendication 1, caractérisés en ce que le copolymère d'acétate de vinyle et d'éthylène présente un indice de fusion, mesuré à 170°C sous une charge de 5 kg, compris entre 0,1 et 10 g/min.

4. Granules coextrudés selon la revendication 1, caractérisés en ce que le polymère thermoplastique polaire est choisi parmi les polyacrylates et les polyméthacrylates de méthyle et d'éthyle, homo- et copolymères, et les copolymères d'éthylène et d'acétate de vinyle à teneur prépondérante en éthylène et leurs mélanges.

5. Granules coextrudés selon la revendication 4, caractérisés en ce que le polymère thermoplastique polaire est choisi parmi le polyméthacrylate de méthyle et les copolymères d'éthylène et d'acétate de vinyle contenant de 75 à 95 % en poids d'éthylène et leurs mélanges.

6. Granules coextrudés selon la revendication 1, caractérisés en ce que leur teneur pondérale en copolymère d'acétate de vinyle et d'éthylène est comprise entre 40 et 99 % en poids.

7. Procédé pour la fabrication de granules coextrudés selon l'une quelconque des revendications 1 à 6, caractérisé en ce qu'on produit un jonc coextrudé par extrusion-séchage d'un coagulat humide de copolymère d'acétate de vinyle et d'éthylène et enrobage en ligne par coextrusion avec un polymère thermoplastique polaire, ledit jonc coextrudé étant ensuite soumis à une granulation.

8. Procédé pour la fabrication de granules coextrudés selon la revendication 7, caractérisé en ce que le coagulat humide de copolymère d'acétate de vinyle et d'éthylène contient de 50 à 90 % en poids de matières solides.

**9.** Procédé pour la fabrication de granules coextrudés selon la revendication 7, caractérisé en ce que l'extrusion-séchage du coagulat humide s'effectue dans une extrudeuse à double vis corotatives pourvue d'un ou de plusieurs évents à une température comprise entre 120 et 150 ° C.

**10.** Procédé pour la fabrication de granules coextrudés selon la revendication 9, caractérisé en ce que l'extrudeuse à double vis corotatives est raccordée à un bloc d'alimentation de coextrusion dans lequel le jonc extrudé de copolymère d'acétate de vinyle et d'éthylène sec est enrobé par coextrusion au moyen de polymère thermoplastique polaire fondu sur une extrudeuse monovis.

**11.** Utilisation des granules coextrudés selon l'une quelconque des revendications 1 à 6 comme adhésifs de coextrusion.

Office européen
des brevets

**RAPPORT DE RECHERCHE EUROPEENNE**

Numero de la demande

EP    91 20 3393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3 779 785 (STILES)<br>* revendications *<br>--- | 1-11 | C08J3/12<br>B29C47/06<br>B29B9/12<br>// C08L31:04 |
| A | US-A-3 911 193 (RESZ & AL.)<br>* revendications 1-2 *<br>--- | 1-11 | |
| A | EP-A-0 294 141 (DU PONT)<br>* Page 4, exemple 1 *<br>* revendication 1 *<br>--- | 1-11 | |
| A | EP-A-0 124 931 (SOLVAY)<br>* page 3, ligne 1 - page 3, ligne 11;<br>revendications 1-11 *<br>--- | 1-11 | |
| A | PATENT ABSTRACTS OF JAPAN<br>vol. 8, no. 191 (M-322)(1628) 4 Septembre 1984<br>& JP-A-59 081 121 ( TOUYOU SEIKAN K.K. ) 10 Mai<br>1984<br>* abrégé * | 1-11 | |
| | ----- | | **DOMAINES TECHNIQUES RECHERCHES (Int. Cl.5 )**<br><br>C08J<br>B29C |

Le présent rapport a été établi pour toutes les revendications

| Lieu de la recherche | Date d'achèvement de la recherche | Examinateur |
|---|---|---|
| LA HAYE | 24 FEVRIER 1992 | René OUDOT |